# EUROPÄISCHE PATENTSCHRIFT

(11) **EP 1 123 256 B1**
(45) Veröffentlichungstag und Bekanntmachung des Hinweises auf die Patenterteilung: **02.05.2003**
(21) Anmeldenummer: 99969074.6
(22) Anmeldetag: 28.08.1999
(51) Int. Cl.: C01B 15/023, B01J 19/32, B01J 19/24, B01J 8/34

(54) **VERFAHREN ZUR DURCHFÜHRUNG VON GAS-FLÜSSIG-REAKTIONEN UND DURCHFLUSSREAKTOR HIERFÜR**
METHOD FOR CARRYING OUT GAS-LIQUID REACTIONS AND CORRESPONDING FLOW REACTOR
PROCEDE PERMETTANT DE CONDUIRE DES REACTIONS GAZ-LIQUIDE ET REACTEUR A ECOULEMENT CORRESPONDANT

(30) Priorität: 12.09.1998 DE 19841843; 23.09.1998 DE 19843574
(43) Veröffentlichungstag der Anmeldung: 16.08.2001
(73) Patentinhaber: Degussa AG, 40474 Düsseldorf (DE)
(72) Erfinder: SCHÜTTE, Rüdiger, D-63755 Alzenau (DE); EICKHOFF, Hubertus, D-63755 Alzenau (DE)
(86) Internationale Anmeldenummer: EP9906366
(87) Internationale Veröffentlichungsnummer: WO00015550

(56) Entgegenhaltungen:
- EP-A- 0 529 422
- EP-A- 0 798 039
- DE-A- 19 808 385
- US-A- 4 337 231

## Beschreibung

Die Erfindung betrifft ein Verfahren zur Durchführung von Gas-Flüssig-Reaktionen, wobei eine flüssige Phase, welche eine Reaktionskomponente darstellt oder eine solche in gelöster, emulgierter oder suspendierter Form enthält, und eine ein umzusetzendes Gas enthaltende Gasphase in Gegenwart oder Abwesenheit eines Katalysators durch einen mehrere Reaktionskammern aufweisenden Durchflußreaktor geleitet werden. Das Verfahren richtet sich insbesondere auf katalytische Hydrierungen und Oxidationsreaktionen, wie die Herstellung von Wasserstoffperoxid nach dem Anthrachinonverfahren. Ein weiterer Gegenstand richtet sich auf einen mehrere parallel angeordnete Reaktionskammern aufweisenden Durchflußreaktor zur Durchführung des Verfahrens.

Gas-Flüssig-Reaktionen lassen sich mit oder ohne Umwälzung des Reaktorinhalts in unterschiedlich ausgebildeten Blasenkolonnen durchführen (siehe Ullmann's encyclopedia of industrial chemistry, 5th ed., Vol. B4, 276-278 (1992)). Die Raum-Zeit-Ausbeute (RZA) von Gas-Flüssig-Reaktionen der gattungsgemäßen Art hängt in erheblichem Umfang von den Strömungsverhältnissen im Reaktor ab. Eine Steigerung der RZA läßt sich durch eine Intensivierung der Stofftransportvorgänge durch Turbulenzen in der . Hauptströmung bewirken. In Schlaufenreaktoren kann dies in gewissem Umfang durch eine Erhöhung der Umwälzrate bewirkt werden. Eine bessere Blasenverteilung läßt sich durch Reaktoreinbauten, wie beispielsweise Kolonnenböden und Packungen, einschließlich Statix-Mixer-Elementen, erzielen. Gemäß einer weiteren Ausführungsform kann die Blasensäule auch in einzelne parallel angeordnete Schächte aufgeteilt sein. Ein der vorliegenden Erfindung zugrundeliegendes Verhältnis zwischen Kammerbreite und Spaltbreite sowie der Spaltbreite lassen sich aus diesem Dokument nicht herleiten.

Aus der DE-AS 10 67 783 ist eine Kontakt- und Trennkolonne bekannt, die auch zur Durchführung katalytischer Reaktionen geeignet ist. Die Kolonne umfaßt mehrere Kolonnenabschnitte mit parallelen Platten, welche in Hauptströmrichtung offene Kammern bilden. Der Plattenabstand beträgt zu der beispielhaften 10 m hohen Kolonne 1,2 mm. Das Dokument vermittelt keine Lehre, einen deutlich größeren Plattenabstand zu wählen.

Die DE-AS 10 55 501 lehrt eine Kolonne für Destillationsoder andere Stoffaustauschzwecke. Die Kolonne enthält Plattenstapel. Eine Lehre, die Kolonne für Gas-Flüssig-Reaktionen zu verwenden und über den Plattenabstand, ist dem Dokument nicht zu entnehmen.

Aus der GB 620 129 ist eine Destillationsvorrichtung bekannt, welche anstelle Füllkörpern in einer Kolonne parallel zur Dampfströmung ausgerichtete Platten enthält. Flüssigkeit und Dampfströmen im Gegenstrom.

Ein Strömungsreaktor gemäß DE 195 36 971 enthält im wesentlichen parallele kapillare Strömungskanäle in Richtung der Hauptströmung. Die Weite der Kanäle beträgt 0,08 bis 0,4 mm.

Eine technisch bedeutsame Anwendung einer Gas-Flüssig-Reaktion ist das Anthrachinonverfahren zur Herstellung von Wasserstoffperoxid (siehe Ullmann's encyclopedia of industrial chemistry, 5th.ed. Vol. A 13, 447-457 (1989)). In der Hydrierstufe dieses Verfahrens wird ein in einer Arbeitslösung gelöster Anthrachinon-Reaktionsträger in Gegenwart eines Suspensionskatalysators mit Wasserstoff in die Anthrahydrochinonform überführt. Gemäß DE-Patentschrift 15 42 089 (= US 3,423,176) erfolgt die Hydrierung im dreiphasigen Reaktionssystem in einem mäanderförmigen Reaktionsraum aus aufeinanderfolgenden, vertikalen, abwechselnd engen und weiten Rohren. Die Erhöhung der Hydriergeschwindigkeit wurde auf die in diesem Reaktor erzielte erhöhte Turbulenz zurückgeführt. Wie jedoch das US-Patent 4,428,923 lehrt, konnte im gleichen Verfahren unter Verwendung eines mäanderförmigen Rohrreaktors aus Röhren gleichen Querschnitts in den auf- und absteigenden Segmenten die Mikroturbulenz und damit die Produktivität, entsprechend der Raum-Zeit-Ausbeute, gesteigert werden.

Der Wirkungsgrad der zur Turbulenzerzeugung notwendigen Energieübertragung (Energiedissipation) wird durch die Turbulenzstruktur beeinflußt. Die Energie wird über Grob-, Fein- und Mikroturbulenzen kaskadenförmig abgebaut, und die eigentlichen chemischen Prozesse in einem Mehrphasensystem werden hauptsächlich durch Mikroturbulenzen gesteuert.

Anstelle in einem rohrförmigen Reaktor unter Einsatz eines Suspensionskatalysators kann die Hydrierstufe des Anthrachinonverfahrens zur Herstellung von Wasserstoffperoxid gemäß EP-B 0 102 934 auch unter Verwendung eines wabenförmigen Katalysators durchgeführt werden. Dieser Katalysator enthält viele parallele Kanäle, deren Wände mit dem Katalysator beschichtet sind. Die engen Kanäle führen zwangsweise zu einem erheblichen Druckverlust und, wie in dem US-Patent 5,071,634 festgestellt wird, zu einer schwachen Durchmischung des Wasserstoffs mit der Arbeitslösung, gegebenenfalls auch zu einer Phasentrennung. Nachteilig an katalysatorbeschichteten wabenförmigen Elementen - gleiches gilt auch für katalysatorbeschichtete Statik-Mixer-Elemente - ist, daß sie sich nur schwer und sehr aufwendig, etwa durch Austauschen der Elemente, regenerieren lassen. Ein weiterer Nachteil ist der ungenügende Wärmetransport aus den inneren Bereichen des üblicherweise aus einem keramischen Material hergestellten wabenförmigen Katalysatorträgers nach außen. Die Zonen für die katalytische Reaktion und die Wärmeabfuhr sind damit voneinander getrennt. Dies macht zusätzliche apparative Maßnahmen zur Wärmeabfuhr erforderlich.

Im Anthrachinonprozeß zur H₂O₂-Herstellung gemäß US-Patent 5,071,634 wird eine mit H₂ beaufschlagte Arbeitslösung durch längliche Statik-Mixer-Zonen mit mehreren mit einem Katalysator beschichteten Ablenkblechen geleitet. Die Statik-Mixer-Zonen gewährleisten zwar eine gute Durchmischung der H₂-Gasblasen mit der Arbeitslösung und wegen der Verteilung des Flusses auf den gesamten Querschnitt auch einen guten Wärmetransport zur gekühlten Außenwand, jedoch erfordert diese Ausbildung wegen des höheren Druckverlusts einen höheren Energieeinsatz. Zudem lassen sich Statik-Mixer-Elemente dann nicht verwenden, wenn das Verfahren unter Verwendung eines Suspensionskatalysators betrieben werden soll, weil die längs und quer zur Strömungsrichtung angeordneten Ablenkbleche des Statik-Mixers zu einer Katalysatorsenke (Ablagerung) führen.

Im Verfahren der EP-A 0 672 617 wird ein Gemisch aus der Arbeitslösung und Wasserstoff mit relativ hoher Geschwindigkeit von oben nach unten über ein KatalysatorFestbett geleitet. Gemäß Figur 2 dieses Dokuments kann der Reaktor vertikale Platten aufweisen, welche aus zwei Netzen mit dazwischen befindlichen Katalysatorpartikeln bestehen. Katalysator und Netze füllen etwa 30 % des Reaktorquerschnitts, so daß ein großer Teil des Querschnitts für den Durchfluß der Gas-Flüssig-Dispersion frei bleibt. Die Platten müssen durchlässig sein, so daß ein ständiger Austausch der links und rechts von einer solchen Platte befindlichen Arbeitslösung als Voraussetzung für die Katalysatorreaktion möglich ist. Nachteilig ist, daß im Regelfall Wasserstoff im Überschuß eingesetzt und damit letzterer rezykliert werden muß. Wegen des limitierten Füllgrads an Katalysator steigen das Reaktorvolumen und damit der hold-up an teurer Arbeitslösung an.

Aufgabe der vorliegenden Erfindung ist ein Verfahren zur Durchführung von Gas-Flüssig-Reaktionen aufzuzeigen, das durch apparative Ausgestaltung des Reaktors zu einer höheren Raum-Zeit-Ausbeute (RZA) führt als unter Verwendung vorbekannter rohrförmiger Durchflußreaktoren. Der Reaktor sollte eine möglichst einfache Bauart aufweisen und zur Durchführung von Gas-Flüssig-Reaktionen in Gegenwart von im flüssigen Medium suspendierten Feststoffen, wie Suspensionskatalysatoren, geeignet sein. Gemäß einer weiteren Aufgabe sollte die RZA des Anthrachinonprozesses zur Herstellung von Wasserstoffperoxid unter Einsatz eines Suspensionskatalysators gegenüber dem Verfahren unter Verwendung vorbekannter mäanderförmiger Rohrreaktoren erhöht werden.

Gefunden wurde ein Verfahren zur Durchführung von Gas-Flüssig-Reaktionen, wobei eine flüssige Phase, welche eine Reaktionskomponente darstellt oder eine solche in gelöster, emulgierter oder suspendierter Form enthält, und eine ein umzusetzendes Gas enthaltende Gasphase in Gegenwart oder Abwesenheit eines Katalysators im Gleichstrom durch einen mindestens drei parallel nebeneinander angeordnete und für gleiche Strömungsrichtung konzipierte spaltförmige Reaktorkammern, deren Verhältnis Breite b zur Spaltbreite s im Mittel größer als 3 ist, aufweisenden Durchflußreaktor gemäß der finition des Anspruchs 1 geleitet werden.

Die Unteransprüche richten sich auf bevorzugte Ausführungsformen des Verfahrens sowie Anwendung desselben zur Herstellung von Wasserstoffperoxid nach dem Anthrachinonprozeß. Zweckmäßigerweise liegt das Verhältnis b/s des zu verwendenden, besonders bevorzugten rohrförmigen Reaktors im Bereich von 5 bis 100, insbesondere 10 bis 50, und die Spaltbreite s im Bereich von 5 bis 100 mm, insbesondere 5 bis 50 mm.

Der zur Durchführung des Verfahrens geeignete Durchflußreaktor umfaßt gemäß der Definition des Anspruchs 7 eine rohr- oder behälterförmige Reaktorwand, einen Einlaß zum Zuführen der Reaktionskomponenten, einen Auslaß zum Abführen des umgesetzten Reaktionsgemischs und mindestens drei parallel nebeneinander angeordnete und für gleiche Strömungsrichtung konzipierte spaltförmige Reaktorkammern, deren Verhältnis Kammerbreite b zu Spaltbreite s im Mittel größer als 3 ist.

In den erfindungsgemäßen Durchflußreaktoren werden in einfacher Weise Mikroturbulenzen erzeugt, womit die Umsetzung beschleunigt wird. Es ist bekannt, daß die massebezogene Dissipationsleistung (W/kg) mit zunehmendem Makromaßstab der Großturbulenz (= Abmessung der größten auftretenden Primärturbulenzballen) abnimmt. Durch die erfindungsgemäße Ausbildung des Reaktors ist es möglich, die Großturbulenzen zu minimieren und die Dissipationsleistung zu erhöhen. Aus der Definition d_{g1} = 4 A/U, worin d_{gl} der dem hydraulischen Durchmesser in einem runden Rohr entsprechende gleichwertige Durchmesser in einem anders geformten Reaktionsraum ist und A der Fläche und U dem Umfang des anderen Reaktionsraumes entsprechen, folgt für rechteckige Querschnitte, wie den erfindungsgemäßen spaltförmigen Reaktorkammern, d_{g1} = 2^{·}b^{·}s / (b+s), worin s die Spaltbreite ist, etwa dem Makromaßstab entspricht und b die Kammerbreite; für s b gilt d_{gl} ≈ 2s.
Diese Gleichung besagt, daß bei den spaltförmigen Reaktionskammern bei gleicher Reynoldszahl wie in runden Rohren nur etwa der halbe Makromaßstab vorliegt. Damit wird in den spaltförmigen Kanälen gegenüber einem Rohrbündel die gleiche Dissipation bei wesentlich geringerem Druckverlust erreicht. Auf den Druckverlust hat nicht nur die Strömungsgeschwindigkeit einen Einfluß, sondern auch die Wandreibung. Nähert man sich dem laminaren Gebiet, wird der Druckverlust im erfindungsgemäßen Reaktor weiter vermindert. Es ist überraschend, daß diese Aspekte bisher bei der Konstruktion von Durchflußreaktoren für Gas-Flüssig-Reaktionen noch nie angewandt wurden.

Die Erfindung wird anhand der Figuren weiter erläutert:
Figur 1 zeigt einen Längsschnitt durch einen rohrförmigen Durchflußreaktor mit zwei um 90° gegeneinander gedrehten Plattenstapeln, wobei der eine Stapel aus einfachen Platten, der andere aus Wärmeaustauscherplatten besteht. Figur 2a zeigt in perspektivischer Ansicht einen rohrförmigen Durchflußreaktor mit einem Stapel aus Wärmeaustauscherplatten.
Figur 2b zeigt einen Querschnitt durch den Reaktor der Figur 2a.
Figur 3 zeigt einen Querschnitt durch eine Profil-Wärmeaustauscherplatte.
Figur 4 zeigt ein Verfahrensschema zur Durchführung des erfindungsgemäßen Verfahrens am Beispiel einer Hydrierung in Gegenwart eines Suspensionskatalysators.

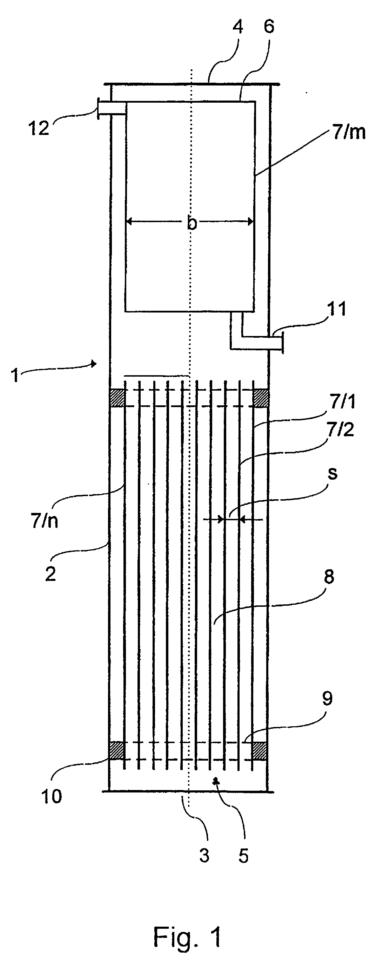

Anhand des bevorzugten Durchflußreaktors der Figur 1 wird der Aufbau verdeutlicht. Der rohrförmige Durchflußreaktor 1 umfaßt eine Reaktorwand 2, einen Einlaß 3 und Auslaß 4 und zwei im Reaktorrohr angeordnete Plattenstapel 5 und 6. Jeder Stapel weist mehrere (n) parallel angeordnete Platten 7/1 bis 7/n auf, die in Längsrichtung zum Rohr ausgerichtet sind und damit n+1 spaltförmige, in Durchflußrichtung offene Reaktorkammern 8 bilden. Im Reaktor der Figur 1 ist der Plattenstapel 5 gegenüber dem Plattenstapel 6 um 90° gedreht. Die Spaltbreite entspricht dem Plattenabstand s - in der Figur markiert zwischen den Platten 7/1 und 7/2. Die Platten sind über Distanzhülsen 9 miteinander verbunden und mittels Ankern 10 im Rohr fixiert. Die spaltförmigen Reaktorkammern 8 haben eine Breite b, welche im Plattenstapel 6 an der in Rohrmitte befindlichen Platte 7/m mit der Plattenbreite b angedeutet ist. Erfindungswesentliches Merkmal für rohrförmige Reaktoren als auch Reaktoren mit anderem Querschnitt ist, daß das Verhältnis der Breite b zur Spaltbreite s im Mittel größer als 3, bevorzugt größer als 5 und besonders bevorzugt größer als 10 ist. Zweckmäßigerweise liegt das Verhältnis b/s im Bereich von 5 bis 100, insbesondere im Bereich von 10 bis 50, und die Spaltbreite im Bereich von 5 bis 100 mm, insbesondere im Bereich von 5 bis 50 mm, besonders bevorzugt 10 bis 50 mm.

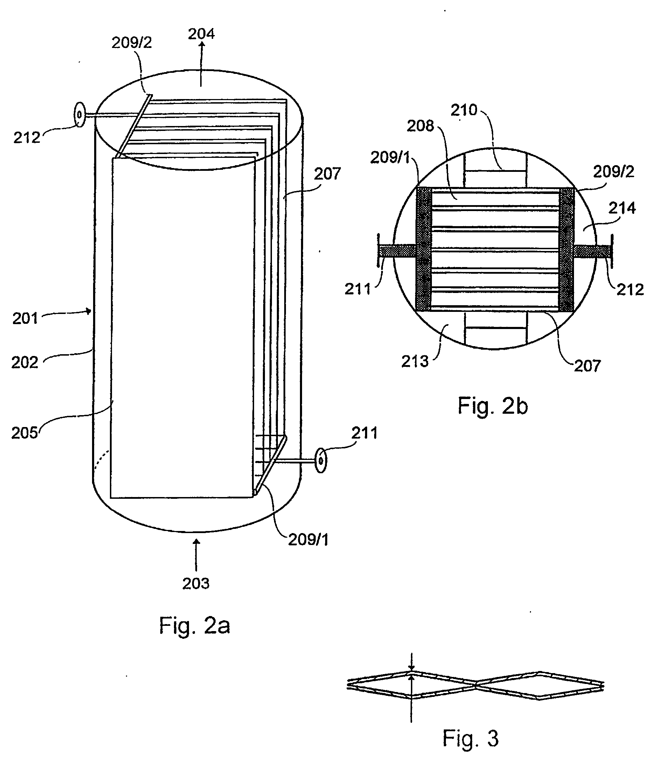

Die Platten können zur Reaktorwand hin offen - wie am Plattenstapel 5 der Figur 2 erkennbar - oder geschlossen sein. Bei offener Bauweise - eine solche ist auch in Figur 2 gut erkennbar - ist es möglich, einen Plattenstapel mit einheitlicherer Platten- und damit Kammerbreite zu konstruieren, was einer besonders einfachen Bauart entspricht. Sofern die Platten an die Reaktorwand heranreichen, sind die Platten im Falle eines rohrförmigen Reaktors mit rundem Querschnitt zwangsläufig unterschiedlich breit, so daß hier das Verhältnis b/s für jenes der mittleren Plattenbreite pro Spaltbreite steht.

Im Reaktor der Figur 1 ist der Plattenstapel 5 aus einfachen Leitblechen ausgebildet, der Plattenstapel 6 dagegen aus Wärmeaustauscherplatten, denen ein Wärme- oder Kühlmedium durch die Stutzen 11 und 12 zu- beziehungsweise abgeführt wird. Zwecks Erhöhung der Turbulenz können die Platten auch profiliert sein. Ein Reaktor kann einen oder mehrere gleiche oder unterschiedlich ausgestaltete Plattenstapel aufweisen.

Figur 2a zeigt in perspektivischer und teilweise geöffneter Ansicht einen Rohrreaktor 201 mit einem im Rohr 202 angeordneten Stapel 205 aus mehreren parallel angeordneten Wärmeaustauscherplatten 207 konstanter Breite. Den Platten wird durch die Stutzen 211 und 212 das Wärme- oder Kühlmedium zu- beziehungsweise abgeführt. Die parallele Anordnung der Platten wird hier mittels der Verbindungsstege oder -platten 209/1 und 209/2 gewährleistet, welche gleichzeitig die Funktion der Distanzhülsen und der Verteilung des Wärme-/Kühlmediums auf die einzelnen Platten einnehmen. In der Figur 2b ist ein Querschnitt des in Figur 2a gezeigten Reaktors 201 mit einem innenliegenden Stapel 205 eines Wärmeaustauschers dargestellt, wobei die Bezugszeichen jenen der Figur 2a entsprechen. In Figur 2b sind zusätzlich Plattenhalterungen (= Anker) 210 eingezeichnet. Das Reaktionsmedium, also das Gas-Flüssig-Gemisch, fließt durch die zwischen den Platten gebildeten Reaktionskammern 208 und die unterhalb und oberhalb des Stapels gebildeten Rohrsegmente 213 und gegebenenfalls auch durch die links und rechts des Stapels gebildeten Rohrsegmente 214.

Sowohl bei einfachen Leitblechen (gemäß Stapel 5 in Fig. 1) als auch Wärmeaustauscherplatten (gemäß Stapel 6 der Fig. 1 sowie Fig. 2a und 2b) ist es möglich, die Platten profiliert zu gestalten, um die Ausbildung der Mikroturbulenz zu begünstigen. Eine solche profilierte Platte wird im Querschnitt in Figur 3 dargestellt, wobei es sich um eine geschweißte Wärmeaustauscherplatte mit den Kanälen für das Wärme-/Kühlmedium handelt.

Obgleich rohrförmige erfindungsgemäße Reaktoren besonders bevorzugt sind, ist es auch möglich, blockförmige Reaktoren mit einem oder mehreren darin angeordneten Plattenstapeln mit dem erfindungsgemäßen Merkmal b/s zu konstruieren. Solche blockförmigen Reaktoren sind dann zweckmäßig, wenn die Platten aus geschweißten Wärmeaustauscherplatten bestehen.

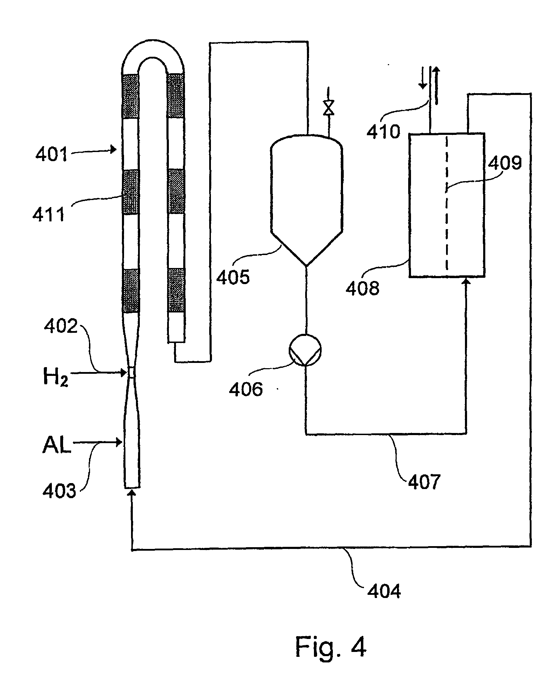

Ein Verfahrensschema zur Durchführung von Gas-Flüssig-Reaktionen, hier einer Hydrierung einer Arbeitslösung (AL) in Gegenwart eines Suspensionskatalysators, in einem Reaktor gemäß dieser Erfindung ist in Figur 4 dargestellt. Das gezeigte Verfahrensschema kann auf beliebige Gas-Flüssig-Reaktionen angewandt werden, beispielsweise auf Hydrierungen unter Einsatz eines Wasserstoff enthaltenden Gases und eines im flüssigen Medium suspendierten Hydrierkatalysators und Oxidationsreaktionen mittels eines Sauerstoff enthaltenden Gases. Ein Anwendungsbeispiel richtet sich auf ein Verfahren zur Herstellung von Wasserstoffperoxid nach dem Anthrachinonverfahren, wobei in einer ersten Stufe ein in einer Arbeitslösung gelöster Anthrachinonreaktionsträger mit Wasserstoff katalytisch hydriert und in einer Folgestufe der hydrierte Reaktionsträger mit einem O₂-enthaltenden Gas oxidiert und schließlich gebildetes Wasserstoffperoxid mit Wasser extrahiert wird und wobei die Hydrierstufe in Gegenwart eines Suspensionskatalysators und/oder die Oxidationsstufe unter Verwendung eines erfindungsgemäßen Reaktors durchgeführt werden. In der Hydrierstufe dieses Prozesses wird der in einem organischen Lösungsmittel oder Lösungsmittelgemisch gelöste zu hydrierende Reaktionsträger - üblicherweise ein 2-Alkylanthrachinon oder Gemisch von 2-Alkylanthrachinonen und 2-Alkyl-tetrahydroanthrachinonen - in Gegenwart eines Suspensionskatalysators, meistens Palladium-Mohr, zumindest teilweise in die Hydrochinonform überführt. Diese erfindungsgemäße Hydrierstufe läßt sich unter Einsatz von im Stand der Technik bekannten Reaktionsträgern, Lösungsmitteln und Gemischen sowie Suspensionskatalysatoren anwenden - verwiesen wird hierzu auf das zuvor genannte Ullmann-Zitat, Vol. A13, 447-457 (1989).

Die Anlage gemäß Figur 4 umfaßt zwei hintereinandergeschaltete rohrförmige Durchflußreaktoren 401 mit erfindungsgemäßem Aufbau. Einzelne Plattenstapel 411, die gegeneinandergedreht sind, sind durch die abwechselnden grauen und weißen Segmente angedeutet.

Wasserstoff wird über eine Leitung 402 in die Umlaufleitung 404, welche die Reaktionskomponenten in flüssiger. suspendierter oder gelöster Form und den Suspensionskatalysator enthält, eingespeist. Die eine zu hydrierende Komponente enthaltende Arbeitslösung AL wird über Leitung 403 in die Umlaufleitung 404 eingespeist. Das Gas-Flüssig-Reaktionsgemisch durchströmt die Reaktoren 401, worin der Wasserstoff zweckmäßigerweise vollständig umgesetzt wird. Das aus dem zweiten Reaktor austretende flüssige Medium gelangt in den Zwischenbehälter 405 und wird von dort mittels einer Pumpe 406 über Leitung 407 einem Filter 408 zugeführt. Im Filter 408, das unterschiedliche Filterelemente 409, beispielsweise Filterkerzen, enthält oder als Querstromfilter ausgebildet sein kann, wird ein Teilstrom 410 über die Filterelemente vom suspendierten Katalysator befreit. Der Teilstrom 410 (= Filtrat), wovon ein kleiner Teil nach Bedarf auch zum Rückspülen des Filters benutzt wird (dies wird durch den unterschiedlich langen Doppelpfeil angedeutet), wird den Folge- oder Aufarbeitungsstufen zugeführt. Der am Filter vorbeiströmende Teil des umgesetzten Reaktionsgemischs, der den suspendierten Katalysator enthält, wird über Leitung 404 der Hydrierstufe zugeführt. Die dem abgezogenen Filtrat äquivalente Menge flüssiges Medium wird vor der Einspeisung von Wasserstoff über Leitung 403 der Leitung 404 zugeführt.

Wie aus dem erfindungsgemäßen Beispiel B und Vergleichsbeispiel VB hervorgeht, führt das erfindungsgemäße Verfahren zu einer großen Steigerung der Raum-Zeit-Ausbeute. Durch die überraschend hohe Wirksamkeit des erfindungsgemäßen Reaktors läßt sich nicht nur die Raum-Zeit-Ausbeute erheblich steigern, sondern gleichzeitig werden der apparative Aufwand und der Energiebedarf reduziert. Während im vorbekannten Verfahren (gemäß US-Patent 4,428,923) viele mäanderförmig angeordnete Reaktionsrohre nötig waren, konnte bei Aufrechterhaltung der Anlagenleistung die Anzahl der Rohre auf weniger als ein Drittel abgesenkt werden, wenn diese Rohre mit erfindungsgemäßen Plattenstapeln ausgerüstet wurden. Ein weiterer Vorteil besteht darin, daß die bisher erforderliche hohe Umwälzrate und die dazu erforderliche Pumpleistung entfallen. Während bisher nur ein Teilstrom dem Filter zugeführt, der Hauptstrom aber in die Hydrierstufe zurückgeführt wurde, kann nun die hydrierte Arbeitslösung im Hauptstrom vom Suspensionskatalysator befreit werden. Ein weiterer Vorteil ist, daß durch die Reduktion mit der Anzahl Reaktionsrohre eine entsprechend große Reduktion des Gesamtvolumens an Arbeitslösung und Supensionskatalysator einhergeht. Die reduzierte Anzahl Reaktionsrohre führt ferner zu niedrigeren Anlagekosten durch eine geringere Menge Baustahl. Da nur jene Menge der hydrierten Arbeitslösung, die nicht als Filtrat abgezogen wird, umgewälzt wird, und zudem der Druckverlust zur Erzeugung der Mikroturbulenz in der Anlage geringer ist als im vorbekannten Verfahren, können die Umwälzpumpen kleiner dimensioniert und damit auch Energie gespart werden.

Die in Figur 2 dargestellte Kombination aus einem Plattenstapel aus einfachen Platten - bei Bedarf können die Platten auch profiliert sein - und einem Stapel aus Wärmeaustauscherplatten wird derart dimensioniert, wie es sich aus der Wärmebilanz der infragestehenden Reaktion als erforderlich erweist.

Die überraschende Wirkung des erfindungsgemäßen Reaktors wird anhand des nachfolgenden Beispiels und Vergleichsbeispiels verdeutlicht.

### Beispiel (B) und Vergleichsbeispiel (VB)

In einer Vorrichtung gemäß Figur 4, aber mit drei erfindungsgemäßen Durchflußreaktoren 401 (= 1 ½ Schlaufen), wurde die Hydrierstufe des Anthrachinonprozesses zur Herstellung von Wasserstoffperoxid durchgeführt (B). In jedem der drei Rohre waren gemäß Figur 1 je ein einfacher Plattenstapel und ein Stapel aus Wärmeaustauscherplatten enthalten; der Spaltabstand betrug 25 mm, die Breite der Kammern im Mittel 350 mm.

Zu Vergleichszwecken (VB) wurde das Verfahren in einer Vorrichtung gemäß Figur 1 des US-Patents 4,428,923 durchgeführt, wobei der Reaktor 13 Rohre (= 6 ½ Schlaufen) umfaßte und die in Figur 1 des US-Patents gezeigte Umwälzleitung 4a in Betrieb war. Die Länge der Rohre und deren Rohrdurchmesser waren im Vergleichsbeispiel und erfindungsgemäßen Beispiel gleich.

Die Arbeitslösung in B und VB war identisch. Sie enthielt als Reaktionsträger ein Gemisch aus 2-Ethyl- und 2-Amylanthrachinon und deren Tetrahydroanthrachinonen in einem Lösungsmittelgemisch aus einem Alkylaromatengemisch (Shellsol®) und Trioctylphosphat. Der Gesamtgehalt an Chinonen betrug 175 g/l. Die Arbeitslösung enthielt als suspendierten Katalysator Palladium-Mohr in einer Menge von etwa 1 g Pd/l Arbeitslösung. Bei einer Temperatur von 60 °C wurde H₂ eingespeist und der Reaktionsträger hydriert.

Im erfindungsgemäßen und im Vergleichsbeispiel wurden über das Filter (408 in Fig. 4 dieser Anmeldung und 6 in Fig. 1 des US-Patents) die gleiche Menge an Arbeitslösung ausgetragen und der Oxidationsstufe zugeführt, die einen spezifischen Hydrochinonanteil enthält, um über die folgenden Prozeßstufen ca. 11 bis 13 g H₂O₂/l Arbeitslösung zu produzieren.

Durch die erfindungsgemäßen Plattenpakete in den Reaktorrohren konnte bei Aufrechterhaltung der Anlagenleistung nicht nur die Zahl der Reaktorrohre von 13 auf 3, sondern auch das Volumen der in den Reaktionsrohren enthaltenen Arbeitslösung einschließlich des Edelmetallkatalysators auf weniger als ein Viertel der im Vergleichsbeispiel erforderlichen Menge reduziert werden. Gleichzeitig war der Druckverlust in der Anlage und damit der Energieaufwand reduziert. Es wurde zudem festgestellt, daß das dritte Rohr im erfindungsgemäßen Beispiel überflüssig war, da die Umsetzung der Reaktionsträger mit dem Wasserstoff bereits im zweiten Rohr vollständig war. Wie der Vergleich zeigt, wird die Raum-Zeit-Ausbeute der Hydrierstufe (= kg H₂O₂-Äquivalente pro m³ Reaktorvolumen und Stunde) erheblich gesteigert.

## Patentansprüche

1. Verfahren zur Durchführung von Gas-Flüssig-Reaktionen, wobei eine flüssige Phase, welche eine Reaktionskomponente darstellt oder eine solche in gelöster, emulgierter oder suspendierter Form enthält, und eine ein umzusetzendes Gas enthaltende Gasphase in Gegenwart oder Abwesenheit eines Katalysators im Gleichstrom durch einen mindestens drei parallel nebeneinander und in Längsrichtung des Reaktors angeordnete und für gleiche Strömungsrichtung konzipierte spaltförmige und in Durchflussrichtung offene Reaktorkammern, deren Verhältnis Breite b zur Spaltbreite s im Mittel größer als 3 ist, aufweisenden Durchflußreaktor geleitet werden,
**dadurch gekennzeichnet,**
**daß** man einen Durchflußreaktor verwendet, dessen Reaktorkammern eine Spaltbreite s im Bereich von 5 bis 100 mm aufweisen, wobei zumindest ein Teil der zwischen den Reaktorkammern befindlichen Wände als von einem Wärmeaustauschermedium durchströmte Wärmeaustauscherplatten ausgebildet sind oder wobei der Reaktor mindestens einen in Strömungsrichtung parallele Kammern bildenden Plattenstapel aus einfachen Platten und mindestens einen in Strömungsrichtung parallele Kammern bildenden Plattenstapel aus Wärmeaustauscherplatten aufweist, und dass man die Temperatur in den Reaktorkammern mittels dieses Mediums regelt.

2. Verfahren nach Anspruch 1,
**dadurch gekennzeichnet,**
**daß** man einen rohrförmigen Reaktor verwendet, dessen Kammern durch einen in einem Rohr angeordneten Plattenstapel mit einem Plattenabstand s (= Spaltbreite) im Bereich von 5 bis 50 mm gebildet werden und deren Verhältnis b/s im Mittel im Bereich von 5 bis 100 liegt, wobei die Kammern zur Reaktorwand hin offen oder geschlossen sein können, in Durchflußrichtung aber offen sind.

3. Verfahren nach einem der Ansprüche 1 oder 2,
**dadurch gekennzeichnet,**
**daß** man einen Reaktor verwendet, dessen Kammern eine Spaltbreite s im Bereich von 10 bis 50 mm und im Mittel ein Verhältnis b/s im Bereich von 10 bis 50 aufweisen.

4. Verfahren nach einem der Ansprüche 1 bis 3,
**dadurch gekennzeichnet,**
**daß** man die flüssige Phase, welche eine gelöste Reaktionskomponente und zusätzlich einen Suspensionskatalysator enthält, im Gleichstrom durch den Reaktor leitet.

5. Verfahren nach einem der Ansprüche 1 bis 4,
**dadurch gekennzeichnet,**
**daß** man als Gas-Flüssig-Reaktion eine katalytische Hydrierung unter Einsatz eines Wasserstoff enthaltenden Gases oder eine Oxidation unter Einsatz eines Sauerstoff enthaltenden Gases durchführt.

6. Verfahren nach Anspruch 5,
**dadurch gekennzeichnet,**
**daß** man als flüssige Phase eine zur Herstellung von Wasserstoffperoxid nach dem Anthrachinonverfahren geeignete, gelöste Anthrachinonreaktionsträger enthaltende Arbeitslösung, welche einen Suspensions-Hydrierkatalysator enthält, und als Gasphase ein Wasserstoff enthaltendes Gas verwendet.

7. Durchflußreaktor zur Durchführung des Verfahrens gemäß einem der Ansprüche 1 bis 6, umfassend eine rohr- oder behälterförmige Reaktorwand, einen Einlaß zum Zuführen der Reaktionskomponenten, einen Auslaß zum Abführen des umgesetzten Reaktionsgemischs und mindestens drei parallel nebeneinander und in Längsrichtung des Reaktors angeordnete und für gleiche Strömungsrichtung konzipierte spaltförmige, in Durchflussrichtung offene Reaktorkammern, deren Verhältnis Kammerbreite b zu Spaltbreite s im Mittel größer als 3 ist,
**dadurch gekennzeichnet,**
**daß** die Spaltbreite s im Bereich von 5 bis 100 mm liegt und zumindest ein Teil der zwischen den Reaktorkammern befindlichen Wände als von einem Wärmeaustauschermedium durchströmte Wärmeaustauacherplatten ausgebildet sind oder der Reaktor mindestens einen in Strömungsrichtung parallele Kammern bildenden Plattenstapel aus einfachen Platten und mindestens einen in Strömungsrichtung parallele Kammern bildenden Plattenstapel aus Wärmeaustauscherplatten aufweist.

8. Durchflußreaktor nach Anspruch 7,
**dadurch gekennzeichnet,**
**daß** er rohrförmig ist und die Kammern durch mindestens einen im Rohr angeordneten Plattenstapel mit einem Plattenabstand s (= Spaltbreite) im Bereich von 5 bis 50 mm ausgebildet sind, das Verhältnis Kammerbreite b zu Spaltbreite s im Mittel im Bereich von 5 bis 100 liegt und die Rammern zur Reaktorwand hin offen oder geschlossen sein können, in Durchflußrichtung aber offen sind.

## Claims

1. Process for carrying out gas-liquid reactions, wherein a liquid phase, which represents a reaction component or contains a reaction component in dissolved, emulsified or suspended form, and a gas phase containing a gas to be reacted, are passed, in the presence or in the absence of a catalyst, in co-current through a continuous flow reactor having at least three slit-shaped reaction chambers open in the direction of flow, arranged parallel to one another and in the longitudinal direction of the reactor, and designed for the same direction of flow, the ratio of the width b of which to the slit width s is, on average, greater than 3,
**characterised in that**
a continuous flow reactor is used the reactor chambers of which have a slit width s in the range of 5 to 100 mm, at least part of the walls between the reaction chambers taking the form of heat exchanger plates through which a heat exchanger medium flows, or the reactor having at least one plate stack forming parallel chambers in the direction of flow consisting of simple plates and at least one plate stack forming parallel chambers in the direction of flow consisting , of heat exchanger plates, and **in that** the temperature in the reactor chambers is regulated by means of this medium.

2. Process according to claim 1,
**characterised in that**
a tubular reactor is used, the chambers of which are formed by a plate stack arranged in a tube with a plate spacing s (= slit width) in the range of 5 to 50 mm and the ratio b/s of which is, on average, in the range of 5 to 100, wherein the chambers can be open or closed towards the wall of the reactor, but are open in the direction of flow.

3. Process according to one of claims 1 or 2,
**characterised in that**
a reactor is used, the chambers of which have a slit width s in the range of 10 to 50 mm, and on average a ratio b/s in the range of 10 to 50.

4. Process according to one of claims 1 to 3,
**characterised in that**
the liquid phase, which contains a dissolved reaction component and, in addition, a suspension catalyst, is passed through the reactor in co-current.

5. Process according to one of claims 1 to 4,
**characterised in that**
a catalytic hydrogenation is carried out as the gas-liquid reaction using a hydrogen-containing gas or an oxidation using an oxygen-containing gas.

6. Process according to claim 5,
**characterised in that**
as the liquid phase, a working solution containing dissolved anthraquinone reaction supports, suitable for the production of hydrogen peroxide by the anthraquinone process, which contains a suspension hydrogenation catalyst, and as the gas phase, a hydrogen-containing gas is used.

7. Continuous flow reactor for carrying out the process according to one of claims 1 to 6, comprising a tubular or vessel-shaped reactor wall, an inlet for introducing the reaction components, an outlet for discharging the reacted reaction mixture and at least three slit-shaped reaction chambers, arranged parallel to one another and in the longitudinal direction of the reactor and designed for the same direction of flow, open in the quantity of flow the ratio of chamber width b to slit width s of which is, on average, greater than 3,
**characterised in that**
the slit width s is in the range of 5 to 100 mm and at least part of the walls between the reaction chambers take the form of heat exchanger plates through which a heat exchanger medium flows, or the reactor has at least one plate stack forming parallel chambers in the direction of flow consisting of simple plates and at least one plate stack forming parallel chambers in the direction of flow consisting of heat exchanger plates.

8. Continuous flow reactor according to claim 7,
**characterised in that**
it is tubular and the chambers are formed by at least one plate stack arranged in the tube with a plate spacing s (= slit width) in the range of 5 to 50 mm, the ratio of chamber width b to slit width s is, on average, in the range of 5 to 100 and the chambers can be open or closed towards the reactor wall but are open in the direction of flow.

## Revendications

1. Procédé pour effectuer des réactions gaz/liquide selon lequel on fait passer une phase liquide représentant un composant de la réaction ou un composant à l'état dissous, émulsifié ou en suspension et une phase gazeuse contenant un gaz à faire réagir en présence ou en l'absence d'un catalyseur, à courant parallèle à travers un réacteur à flux traversant ayant au moins trois chambres de réaction, parallèles, juxtaposées et s'étendant dans la direction longitudinale du réacteur, conçues pour le même sens de passage, en forme de colonnes, ouvertes dans le sens du passage et dont le rapport entre la largeur (b) et la largeur de la colonne (s) est en moyenne supérieur à 3,
**caractérisé en ce qu'**
on utilise un réacteur à flux traversant dont les chambres de réaction ont une largeur de colonne (s) de l'ordre de 5 à 100 mm
dans lequel au moins une partie des cloisons entre les chambres de réaction sont réalisées comme des plaques d'échangeur de chaleur traversées par un fluide d'échange de chaleur ou
dans lequel le réacteur comporte au moins une pile de plaques formant des chambres parallèles dans la direction de l'écoulement, cette pile étant formée de plaques simples et d'au moins une pile de plaques d'échange de chaleur formant des chambres parallèles dans la direction de l'écoulement, et
on règle la température dans les chambres de réaction à l'aide de ce milieu.

2. Procédé selon la revendication 1,
**caractérisé en ce qu'**
on utilise un réacteur tubulaire dont les chambres sont formées par une pile de plaques installée dans un tube avec un intervalle de plaque (s) (largeur de colonne) de l'ordre de 5 à 50 mm, et dont le rapport b/s est en moyenne de l'ordre de 5 à 100, les chambres pouvant être ouvertes ou fermées du côté de la paroi du réacteur mais ouvertes dans le sens du passage.

3. Procédé selon l'une des revendications 1 ou 2,
**caractérisé en ce qu'**
on utilise un réacteur dont les chambres ont une largeur de colonne (s) de l'ordre de 10 à 50 mm et en moyenne un rapport b/s de l'ordre de 10 à 50.

4. Procédé selon les revendications 1 à 3,
**caractérisé en ce qu'**
on fait passer la phase liquide contenant un composant de réaction dissous et en plus un catalyseur en suspension, en courant parallèle à travers le réacteur.

5. Procédé selon l'une des revendications 1 à 4,
**caractérisé en ce que**
comme réaction gaz-liquide on effectue une hydration catalytique en utilisant un gaz contenant de l'hydrogène ou une oxydation en utilisant un gaz contenant de l'oxygène.

6. Procédé selon la revendication 5,
**caractérisé en ce que**
la phase liquide contient une solution active pour la fabrication de peroxyde d'oxygène selon le procédé d'anthrachinone, cette solution contenant un support de réaction d'anthrachinone, avec un catalyseur d'hydration en suspension et la phase gazeuse est un gaz contenant de l'hydrogène.

7. Réacteur à passage pour effectuer le procédé selon l'une des revendications 1 à 6, comprenant une paroi de réacteur en forme de tube ou de récipient ayant une entrée pour introduire les composants de la réaction, une sortie pour évacuer le mélange de réaction transformé et au moins trois chambres de réaction juxtaposées, parallèles, installées dans la direction longitudinale du réacteur et conçues pour le même sens de passage, ces chambres étant en forme de colonnes, ouvertes dans le sens du passage et dont le rapport entre la largeur (b) de la chambre et la largeur de colonne (s) est en moyenne supérieur à 3,
**caractérisé en ce que**
la largeur de colonne (s) est de l'ordre de 5 à 100 mm et au moins une partie des cloisons qui se trouve entre les chambres de réaction est formée par des plaques d'échangeur de chaleur, traversées par un fluide échangeur de chaleur ou le réacteur comporte au moins une pile de plaques formant des chambres parallèles à la direction de passage, cette pile étant composée de simples plaques et d'au moins une pile de plaques formant des chambres parallèles à la direction de passage, cette pile étant composée de plaques d'échangeur de chaleur.

8. Réacteur à passage selon la revendication 7,
**caractérisé en ce qu'**
il est tubulaire et les chambres sont formées par au moins une pile de plaques installée dans le tube avec un intervalle de plaque (s) (largeur de colonne) de l'ordre de 5 à 50 mm, le rapport entre la largeur de la chambre (b) et la largeur de la colonne (s) étant en moyenne de l'ordre de 5 à 100, et les chambres sont ouvertes ou fermées du côté de la paroi du réacteur mais ouvertes dans le sens du passage.
